# EUROPEAN PATENT APPLICATION

(11) **EP 3 275 951 A1**
(43) Date of publication of application: **31.01.2018**
(21) Application number: 16768119.6
(22) Date of filing: 20.01.2016
(51) Int. Cl.: C09D 17/00, C09C 1/56, C09C 3/06

(54) **PROCESS FOR PRODUCING AQUEOUS DISPERSION OF OXIDIZED CARBON BLACK PARTICLES**

(30) Priority: 26.03.2015 JP 2015063980
(71) Applicant: Tokai Carbon Co., Ltd., Minato-ku Tokyo 107-8636 (JP)
(72) Inventor: KIRINO Tomoaki, Tokyo 107-8636 (JP); TAKEI Tohru, Tokyo 107-8636 (JP); SATO Yoshihiro, Tokyo 107-8636 (JP); NAWATE Hironori, Tokyo 107-8636 (JP)
(74) Representative: Müller-Boré & Partner Patentanwälte PartG mbB
(86) International application number: PCT/JP2016/051522
(87) International publication number: WO 2016/152216

(57) **Abstract**

Provided is a method for conveniently producing a water dispersion of oxidized carbon black particles that exhibits excellent dispersibility and storage stability, in the case of producing a water dispersion of oxidized carbon black particles by liquid-phase oxidation of carbon black particles using a persulfate. In the method for producing a water dispersion of oxidized carbon black particles by bringing at least one persulfate and carbon black particles into contact to perform liquid-phase oxidation, in the presence of an inorganic alkali in an amount equal to or greater than an amount theoretically necessary for neutralizing an acidic product produced by the liquid-phase oxidation, the persulfate and the carbon black particles are brought into contact in water and subjected to liquid-phase oxidation treatment while being heated.

## Description

### [Technical Field]

The present invention relates to a method for producing a water dispersion of oxidized carbon black particles.

### [Background Art]

Ink-jet printers involving an ink-jet ink composition that is a functional liquid containing a functional coloring material, a fixing resin, and the like are widely used as non-contact image forming apparatuses in household, commercial, industrial, and such fields. As for the ink-jet ink composition, an aqueous ink-jet ink composition in which a water solvent is used in place of an organic solvent as a dispersion medium is essential especially to household and business applications in order to suppress odor and enhance safety.

While a black aqueous pigment ink composition in which a carbon black pigment is used is known as an aqueous ink-jet ink composition, carbon black is hydrophobic, and its wettability with water is poor. Therefore, it is extremely difficult to stably disperse carbon black at a high concentration in water. This is because the amount of hydrophilic functional groups, e.g., acidic hydroxyl groups such as a carboxyl group and a hydroxyl group that are highly compatible with an aqueous medium such as water molecules and are present on the carbon black surface, is extremely small.

Accordingly, attempts have been made for many years to subject carbon black particles to oxidation treatment to impart a hydrophilic functional group to the surface and thereby improve the dispersibility of carbon black particles in water. For example, the applicant has previously proposed a method for producing oxidized carbon black particles by liquid-phase oxidation (wet oxidation) using a persulfate as an oxidizer (Patent Literature 1 (Japanese Patent Laid-Open No. 11-148027)).

### [Citation List]

### [Patent Literature]

[Patent Literature 1] Japanese Patent Laid-Open No. 11-148027

### [Summary of Invention]

### [Technical Problem]

However, as a result of liquid-phase oxidation with a persulfate, a large amount of an acidic by-product is produced and remains in the system. Accordingly, the pigment separation process by filtration treatment and centrifugation is complex and, in addition, disposal treatment for an acidic waste liquid is also separately required.

Additionally, in order to enhance dispersibility in an aqueous medium, a process for neutralization treatment of an acidic functional group using an inorganic alkali or an organic alkali needs to be performed on the acidic group formed on the surface of the oxidized carbon black particles that have been wet-oxidized using a persulfate.

Under these circumstances, an object of the present invention is to provide a method for conveniently producing a water dispersion of oxidized carbon black particles that exhibits excellent dispersibility and storage stability, in the case of producing a water dispersion of oxidized carbon black particles by liquid-phase oxidation of carbon black particles using a persulfate.

### [Solution to Problem]

Having conducted diligent research to solve the above technical problem, the inventors found that, when producing a water dispersion of oxidized carbon black particles by bringing at least one persulfate and carbon black particles into contact to perform liquid-phase oxidation, the above technical problem can be solved by bringing a persulfate and carbon black particles into contact, and performing liquid-phase oxidation treatment while heating, in the presence of an inorganic alkali in an amount equal to or greater than an amount theoretically necessary for neutralizing an acidic product produced by the liquid-phase oxidation, and accomplished the present invention based on this finding.

That is to say, the present invention provides:
(1) A method for producing a water dispersion of oxidized carbon black particles by bringing at least one persulfate and carbon black particles into contact to perform liquid-phase oxidation, wherein
   in the presence of an inorganic alkali in an amount equal to or greater than an amount theoretically necessary for neutralizing an acidic product produced by the liquid-phase oxidation,
   the persulfate and the carbon black particles are brought into contact in water and subjected to liquid-phase oxidation treatment while being heated.
(2) The method for producing a water dispersion of oxidized carbon black particles according to (1), wherein a water slurry comprising the inorganic alkali in an amount equal to or greater than an amount theoretically necessary for neutralizing an acidic product produced by the liquid-phase oxidation and the carbon black particles is mixed with the at least one persulfate, and the resulting mixture is heated.
(3) The method for producing a water dispersion of oxidized carbon black particles according to (1), wherein a water slurry comprising the at least one persulfate and the carbon black particles is mixed with the inorganic alkali in an amount equal to or greater than an amount theoretically necessary for neutralizing an acidic product produced by the liquid-phase oxidation, and the resulting mixture is heated.
(4) The method for producing a water dispersion of oxidized carbon black particles according to (1), wherein an aqueous solution of the at least one persulfate, the carbon black particles, and the inorganic alkali in an amount equal to or greater than an amount theoretically necessary for neutralizing an acidic product produced by the liquid-phase oxidation are mixed while being heated.
(5) The method for producing a water dispersion of oxidized carbon black particles according to (1), wherein the heating is performed at a temperature of 40 to 90°C.
(6) The method for producing a water dispersion of oxidized carbon black particles according to (2), wherein the heating is performed at a temperature of 40 to 90°C.
(7) The method for producing a water dispersion of oxidized carbon black particles according to (3), wherein the heating is performed at a temperature of 40 to 90°C.
(8) The method for producing a water dispersion of oxidized carbon black particles according to (4), wherein the heating is performed at a temperature of 40 to 90°C.
(9) The method for producing a water dispersion of oxidized carbon black particles according to any one of (1) to (8), further comprising sequentially performing purification treatment and classification treatment after the liquid-phase oxidation treatment.

### [Advantageous Effect of Invention]

According to the present invention, in the case of producing a water dispersion of oxidized carbon black particles by liquid-phase oxidation of carbon black particles using a persulfate, liquid-phase oxidation is performed in the presence of an inorganic alkali in an amount equal to or greater than an amount theoretically necessary for neutralizing an acidic product produced by liquid-phase oxidation, therefore not only is it possible to simultaneously perform liquid-phase oxidation treatment and neutralization treatment without separately performing neutralization treatment and conveniently separate the target pigment by promptly neutralizing a produced acidic by-product and optionally performing purification treatment, classification treatment, and the like, but also the need of disposal treatment for an acidic waste liquid is eliminated, and consequently a water dispersion of oxidized carbon black particles that exhibits excellent dispersibility and storage stability can be produced.

Thus, according to the present invention, in the case of producing a water dispersion of oxidized carbon black particles by liquid-phase oxidation of carbon black particles using a persulfate, a method for conveniently producing a water dispersion of oxidized carbon black particles that exhibits excellent dispersibility and storage stability can be provided.

### [Description of Embodiments]

The method for producing a water dispersion of oxidized carbon black particles according to the present invention is a method for producing a water dispersion of oxidized carbon black particles by bringing at least one persulfate and carbon black particles into contact to perform liquid-phase oxidation, wherein in the presence of an inorganic alkali in an amount equal to or greater than an amount theoretically necessary for neutralizing an acidic product produced by the liquid-phase oxidation, the persulfate and the carbon black particles are brought into contact in water and subjected to liquid-phase oxidation treatment while being heated.

In the method for producing a water dispersion of oxidized carbon black particles according to the present invention, carbon black particles constituting the oxidized carbon black particles are not particularly limited, and furnace black particles prepared by an oil furnace process, channel black particles produced by a channel process, gas black produced by a procedure alternative to the channel process, acetylene black particles produced by an acetylene method, thermal black particles produced by a thermal process, and the like are all applicable. In particular, furnace black particles, the particle diameter of which can be precisely controlled, and channel black particles and gas black particles, the surfaces of which have acidic functional groups such as a carboxyl group and a hydroxy group, are suitable.

Furnace black particles are not particularly limited as long as they are of a generally available grade, and are suitably selected according to the purpose in reference to, for example, structural indices indicated by the nitrogen adsorption specific surface area and the amount of absorbed DBP of the carbon black particles.

In the method for producing a water dispersion of oxidized carbon black particles according to the present invention, the nitrogen adsorption specific surface area (N₂SA) of the carbon black particles is preferably 300 m²/g or less, more preferably 80 m²/g to 300 m²/g, and even more preferably 100 m²/g to 300 m²/g.

In the method for producing a water dispersion of oxidized carbon black particles according to the present invention, due to the nitrogen adsorption specific surface area (N₂SA) of the carbon black particles being within the above range, the viscosity of the dispersion can be kept low, and the production of precipitates can be suppressed.

Herein, N₂SA means a value measured in accordance with "Carbon black for rubber industry - Fundamental characteristics - Part 2: Determination of specific surface area - Nitrogen adsorption methods - Single-point procedures" set forth in JIS K 6217-2.

In the method for producing a water dispersion of oxidized carbon black particles according to the present invention, the amount of absorbed DBP of the carbon black particles is preferably 50 cm³/100 g or more, more preferably 100 cm³/100 g to 180 cm³/100 g, and even more preferably 110 cm³/100 g to 150 cm³/100 g.

In the method for producing a water dispersion of oxidized carbon black particles according to the present invention, due to the amount of absorbed DBP of the carbon black particles being 50 cm³/100 g or more, excellent blackness (printing density) can be exerted.

Herein, the amount of absorbed DBP means a value measured in accordance with "Carbon black for rubber industry - Fundamental characteristics - Part 4: Determination of oil absorption number (OAN) and oil absorption number of compressed sample (COAN)" set forth in JIS K 6217-4.

In the method for producing a water dispersion of oxidized carbon black particles according to the present invention, the volume average particle diameter of the carbon black particles is preferably 30 nm to 250 nm, more preferably 50 nm to 150 nm, and even more preferably 70 nm to 120 nm.

Due to the volume average particle diameter of the carbon black particles being within the above range, excellent dischargeability and blackness (printing density) are likely to be exerted when the obtained water dispersion of oxidized carbon black particles is used in aqueous black ink such as ink-jet printer ink.

Herein, the volume average particle diameter of the carbon black particles means the particle diameter (average particle diameter D50) at 50% cumulative particle size in the volume-based particle size distribution as measured with a laser diffraction particle size distribution analyzer.

Specific examples of the carbon black particles include Tokablack #4500, Tokablack #8500, Tokablack #7550SB, and Tokablack #7550F (manufactured by Tokai Carbon Co., Ltd.); #650, #750, MA600, #44B, #44, #45B, MA7, MA11, #47, #45, #33, #45L, #47, #50, #52, MA77, MA8 (manufactured by Mitsubishi Chemical Corporation); FW 200, FW 2V, FWI, FW 18PS, NIPex 150, NIPex 160IQ, NIPex 170IQ, NIpex 180IQ, FW 1, Special Black 6, S160, S170 (manufactured by Orion Engineered Carbons); Black Pearls 1000M, Black Pearls 800, Black Pearls 880, Monarch 1300, Monarch 700, Monarch 880, CRX 1444, Regal 330R, Regal 660R, Regal 660, Regal 415R, Regal 415, Black Pearls 4630, and Monarch 4630 (manufactured by Cabot Corporation); Raven 7000, Raven 3500, Raven 5250, Raven 5750, Raven 5000 ULTRA II, HV 3396, Raven 1255, Raven 1250, Raven 1190, Raven 1000, Raven 1020, Raven 1035, Raven 1100 ULTRA, Raven 1170, and Raven 1200 (manufactured by Birla Columbian); DB 1305 (manufactured by KOSCO); SUNBLACK 700, 705, 710, 715, 720, 725, 300, 305, 320, 325, X25, X45 (manufactured by Asahi Carbon Co., Ltd.); N220, N110, N234, N121 (manufactured by Sid Richardson); Niteron #300 (manufactured by NSCC Carbon Co., Ltd.); and Showblack N134, N110, N220, N234, and N219 (manufactured by Cabot Japan).

In the method for producing a water dispersion of oxidized carbon black particles according to the present invention, the above carbon black particles can be used singly or as a mixture of multiple types.

In the method for producing a water dispersion of oxidized carbon black particles according to the present invention, at least one persulfate and carbon black particles are brought into contact in water to perform liquid-phase oxidation.

The persulfate used in liquid-phase oxidation treatment is not particularly limited, and a univalent persulfuric acid salt is preferable. Specifically, the persulfate can be one or more selected from alkaline metal salts such as a lithium salt of persulfuric acid, a sodium salt of persulfuric acid, and a potassium salt of persulfuric acid, and an ammonia salt.

In the method for producing a water dispersion of oxidized carbon black particles according to the present invention, the amount of the persulfate used is preferably 550 g or less, more preferably 50 g to 550 g, and even more preferably 60 g to 550 g, per 100 g of the carbon black particles mixed in the reaction solution (an aqueous oxidizer solution).

In the method for producing a water dispersion of oxidized carbon black particles according to the present invention, the concentration of the persulfate mixed in the reaction solution is preferably 205 g/l or less, more preferably 15 g/l to 205 g/l, and even more preferably 20 g/l to 205 g/l.

In the method for producing a water dispersion of oxidized carbon black particles according to the present invention, liquid-phase oxidation treatment is performed using a persulfate, and it is thereby possible to form an acidic group on the surface of the carbon black particles and form the oxidized carbon black particles.

The degree of liquid-phase oxidation of the carbon black particles by a persulfate can be controlled by suitably regulating the amount of the persulfate mixed per 100 g of the carbon black particles mixed in the reaction solution, the concentration of the persulfate in the reaction solution, the treatment temperature during the liquid-phase oxidation, the treatment time during the liquid-phase oxidation, the stirring speed, and the like.

In the method for producing a water dispersion of oxidized carbon black particles according to the present invention, the inorganic alkali is not particularly limited, and can be one or more selected from lithium hydroxide, sodium hydroxide, potassium hydroxide, rubidium hydroxide, ammonia, and the like. Sodium hydroxide or potassium hydroxide is suitable, which is industrially readily available and unlikely to pose an environmental burden. The inorganic alkali may be used after being diluted with water to a suitable concentration that is equal to or less than the solubility.

In the method for producing a water dispersion of oxidized carbon black particles according to the present invention, an inorganic alkali is used as an alkali because organic alkalis are oxidatively decomposed by oxidizers, thus making it difficult to use organic alkalis.

In the method for producing a water dispersion of oxidized carbon black particles according to the present invention, the inorganic alkali is used in an amount equal to or greater than an amount theoretically necessary for neutralizing an acidic product produced by liquid-phase oxidation.

Herein, the amount theoretically necessary for neutralizing an acidic product produced by liquid-phase oxidation means the molar amount of the inorganic alkali necessary for neutralizing sulfuric acid produced from the entirety of the persulfate used, assuming that 1 mol of sulfuric acid is produced from 1 mol of the persulfate used.

Accordingly, herein, the amount theoretically necessary for neutralizing an acidic product produced by liquid-phase oxidation means the molar amount of the amount of the inorganic alkali necessary for neutralizing sulfuric acid produced from the entirety of the persulfate, or the molar amount of the amount of the inorganic alkali exceeding it.

In the method for producing a water dispersion of oxidized carbon black particles according to the present invention, the amount of the inorganic alkali used is preferably an amount such that the pH of the reaction solution during liquid-phase oxidation treatment is in a neutral region to a weakly alkaline region, and specifically, an amount such that the pH of the water dispersion after liquid-phase oxidation treatment is pH 7.0 to 9.0 is preferable, an amount such that the pH is 7.25 to 8.75 is more preferable, and an amount such that the pH is 7.5 to 8.5 is even more preferable.

In the method for producing a water dispersion of oxidized carbon black particles according to the present invention, by controlling the pH during liquid-phase oxidation treatment to the above range, not only is it possible to simultaneously perform liquid-phase oxidation treatment and neutralization treatment without separately performing neutralization treatment and conveniently separate the target pigment by promptly neutralizing a produced acidic by-product and optionally performing purification treatment, classification treatment, and the like, but also the need of disposal treatment for an acidic waste liquid is eliminated, and consequently a water dispersion of oxidized carbon black particles that exhibits excellent dispersibility and storage stability can be easily produced.

In the method for producing a water dispersion of oxidized carbon black particles according to the present invention, the inorganic alkali may be gradually added such that the pH of the reaction solution is always in a neutral region to a weakly alkaline region while monitoring the pH of the reaction solution during liquid-phase oxidation, but it is preferable to add the entire amount of the inorganic alkali used to the reaction system at once for conveniently performing the liquid-phase treatment.

As for the water solvent used in the method for producing a water dispersion of oxidized carbon black particles according to the present invention, ion exchanged water that has been ion-exchanged using an ion exchange resin, reverse osmosis water that has been filtered through a reverse osmosis membrane, ultrapure water from which foreign matter has been removed to an even higher extent according to the required purity, and the like can be suitably used.

In the method for producing a water dispersion of oxidized carbon black particles according to the present invention, the manner of bringing carbon black particles, a persulfate, and an inorganic alkali into contact in water to perform liquid-phase oxidation is not particularly limited.

A manner of performing liquid-phase oxidation is, for example, (a) a method involving mixing a water slurry containing an inorganic alkali in an amount equal to or greater than an amount theoretically necessary for neutralizing an acidic product produced by liquid-phase oxidation and carbon black particles with at least one persulfate, and heating the mixture.

Also, a manner of performing liquid-phase oxidation is (b) a method involving mixing a water slurry containing at least one persulfate and carbon black particles with an inorganic alkali in an amount equal to or greater than an amount theoretically necessary for neutralizing an acidic product produced by liquid-phase oxidation, and heating the mixture.

Furthermore, a manner of performing liquid-phase oxidation is (c) a method involving mixing an aqueous solution of at least one persulfate, carbon black particles, and an inorganic alkali in an amount equal to or greater than an amount theoretically necessary for neutralizing an acidic product produced by liquid-phase oxidation, while heating.

In the method for producing a water dispersion of oxidized carbon black particles according to the present invention, it is preferable to bring carbon black particles, a persulfate, and an inorganic alkali into contact in water while stirring.

In this case, the stirring speed is preferably 50 pm (revolution/minute)or more, more preferably 50 rpm to 350 rpm, and even more preferably 50 rpm to 200 rpm.

In the method for producing a water dispersion of oxidized carbon black particles according to the present invention, an inline disperser may be used to disperse carbon black particles, a persulfate, and an inorganic alkali in water during liquid-phase oxidation treatment.

Examples of the inline disperser include a rotor-stator disperser, a bead mill, a ball mill, and a media-less disperser.

In the method for producing a water dispersion of oxidized carbon black particles according to the present invention, in order to avoid excessive stress on carbon black particles, it is preferable to use a rotor-stator disperser. Examples of the rotor-stator disperser include rotor-stator dispersers 200L and 275LS manufactured by Silverson Nippon Ltd.

In the method for producing a water dispersion of oxidized carbon black particles according to the present invention, the treatment temperature during liquid-phase oxidation treatment is preferably 40 to 90°C, more preferably 50 to 90°C, and even more preferably 60 to 90°C.

When the treatment temperature is lower than 40°C, provision of an acidic functional group to the carbon black surface by the persulfate is unlikely to progress, and when exceeding 90°C, the produced radical disappears in a short period of time, thus making it difficult to perform an appropriate surface treatment.

In the method for producing a water dispersion of oxidized carbon black particles according to the present invention, reaction heat may be produced by liquid-phase oxidation treatment, and in this case as well, it is preferable to control the treatment temperature to be within the above temperature range.

In the method for producing a water dispersion of oxidized carbon black particles according to the present invention, the treatment time during liquid-phase oxidation treatment is preferably 1 hour to 10 hours, and more preferably 3 hours to 10 hours.

In the method for producing a water dispersion of oxidized carbon black particles according to the present invention, it is preferable to additionally perform purification treatment or classification treatment after liquid-phase oxidation treatment.

It is preferable to perform purification treatment to a predetermined concentration using, for example, a separation membrane such as an ultrafiltration membrane (UF), a reverse osmosis membrane (RO), or an electrodialytic membrane. From the viewpoint of a treatment speed (a necessary treatment time), it is more preferable to perform purification treatment using an ultrafiltration membrane.

The ultrafiltration membrane can be used without limitations as long as it has a molecular-weight cutoff such that carbon black particles do not pass through, and water and ions pass through.

As for the degree of salt removal (the degree of purification) by purification treatment, for example, when oxidized carbon black particles are contained in a concentration of 4% by mass, it is preferable to perform purification treatment until the electric conductivity of the aqueous dispersion is 200 µS/cm or less.

Residual salts such as an acidic by-product salt produced during liquid-phase oxidation treatment may inhibit the dispersibility of oxidation-treated carbon black particles. By removing the residual salts by the above purification treatment, the dispersion stability of the oxidized carbon black particles can be enhanced. Removal of the residual salts by purification treatment is also effective in terms of suppressing the re-aggregation of the surface-treated carbon black particles in the aqueous dispersion.

In the method for producing a water dispersion of oxidized carbon black particles according to the present invention, by additionally performing classification treatment after liquid-phase oxidation treatment, undispersed mass and coarse particles in the reaction solution that are produced during the liquid-phase oxidation treatment can be removed.

In the method for producing a water dispersion of oxidized carbon black particles according to the present invention, it is preferable to perform classification treatment by way of centrifugation, filtration, or the like.

When performing classification treatment by centrifugation, examples include methods where classification treatment is performed using a horizontal decanter, a rotor-type high speed centrifuge, a vertical centrifuge, a disk-type separator, or the like.

When performing classification treatment by filtration, examples include methods where classification treatment is effectively performed using a depth filter, a pleat filter, a membrane filter, or the like, and, furthermore, using such filters at multiple stages.

Moreover, performing filtration treatment after centrifugation enables more precise classification treatment.

In the method for producing a water dispersion of oxidized carbon black particles according to the present invention, by additionally performing classification treatment after liquid-phase oxidation treatment to remove undispersed mass and coarse particles in the reaction solution that are produced during liquid-phase oxidation treatment, the clogging of printer nozzles can be easily suppressed when the obtained water dispersion of oxidized carbon black particles is used in an ink-jet ink composition.

In the method for producing a water dispersion of oxidized carbon black particles according to the present invention, the obtained oxidized carbon black particles have an acidic functional group that is directly bonded to the surface of the carbon black particles. Examples of the acidic functional group include a carboxyl group, a hydroxyl group, and a lactone group.

In the method for producing a water dispersion of oxidized carbon black particles according to the present invention, the amount of a hydroxyl group on the surface of the obtained oxidized carbon black particles is preferably 50 to 300 µmol/g, more preferably 50 to 250 µmol/g, and even more preferably 50 to 200 µmol/g per unit weight of carbon black.

Herein, the amount of a hydroxyl group on the surface of oxidized carbon black particles means a value calculated by the following method. That is to say, 1.0 g of surface-modified carbon black obtained by drying is added to 100 ml of 3.0 N hydrochloric acid, the mixture is shaken for 3 hours, then filtration is performed using an ultrafiltration membrane at a carbon black concentration of 4% by weight until the electric conductivity is 200 µS/cm or less, this is performed in triplicate, and drying is performed again. 2,2'-Diphenyl-1-picrylhydrazyl is dissolved in carbon tetrachloride to prepare a 5x10⁻⁴ mol/L solution. To this solution are added 0.1 to 0.6 g of the above washed oxidized carbon black particles, stirred for 6 hours in a constant temperature bath at 60°C, and filtered off, the filtrate is measured with a UV absorptiometer to determine the amount of a hydroxyl group from absorbance, and the obtained amount of a hydroxyl group is divided by the mass of carbon black particles to thereby calculate the amount of a hydroxyl group per unit weight of carbon black.

In the method for producing a water dispersion of oxidized carbon black particles according to the present invention, the amount of a carboxyl group on the surface of carbon black particles is preferably 150 to 1200 µmol/g, more preferably 300 to 1200 µmol/g, and even more preferably 400 to 1200 µmol/g per unit weight of carbon black.

Herein, the amount of a carboxyl group of carbon black particles means a value calculated by the following method.

That is to say, 10.0 g of oxidized carbon black obtained by drying is added to 1 L of hydrochloric acid having a concentration of 3.0 N, the mixture is shaken for 3 hours, and then treated using an ultrafiltration membrane at an oxidized carbon black concentration of 4% by weight until the electric conductivity is 200 µS/cm or less, this is performed in triplicate, and drying is performed again. The above washed oxidized carbon black particles in an amount of about 2 to 5 g are added to a 0.976 N sodium hydrogencarbonate solution, stirred for about 6 hours, and then filtered off. A 0.05 N hydrochloric acid solution is added to the filtrate, then a neutralization titration test is performed with a 0.05 N aqueous sodium hydroxide solution until the pH is 7.0 to determine the amount of a carboxyl group, and the obtained amount of a carboxyl group is divided by the mass of carbon black particles to thereby calculate the amount of a carboxyl group per unit weight of carbon black.

In the method for producing a water dispersion of oxidized carbon black particles according to the present invention, due to the amount of a hydroxyl group and the amount of a carboxyl group of the oxidized carbon black particles being within the above ranges, good dispersibility in an aqueous medium can be easily exerted.

In the method for producing a water dispersion of oxidized carbon black particles according to the present invention, the total amount of acidic functional groups on the surface of carbon black particles is preferably 200 to 1500 µmol/g, more preferably 350 to 1450 µmol/g, and even more preferably 450 to 1400 µmol/g per unit weight of carbon black.

In the method for producing a water dispersion of oxidized carbon black particles according to the present invention, the total amount of acidic functional groups of the oxidized carbon black particles can be determined from the sum of the amounts of the respective acidic functional groups formed on the surface of carbon black particles.

In the method for producing a water dispersion of oxidized carbon black particles according to the present invention, the oxidized carbon black particles are contained preferably in an amount of 1 to 25% by mass, more preferably 5 to 20% by mass, and even more preferably 10 to 20% by mass as a solid content.

The concentration can be adjusted by performing concentration treatment until a predetermined concentration is reached using a separation membrane such as an ultrafiltration membrane (UF), a reverse osmosis membrane (RO), or an electrodialytic membrane. From the viewpoint of a treatment speed (a necessary treatment time), it is more preferable to adjust the concentration using an ultrafiltration membrane.

In the method for producing a water dispersion of oxidized carbon black particles according to the present invention, due to the solid concentration of the oxidized carbon black particles being within the above range, a desired aqueous ink composition such as an aqueous ink-jet ink composition can be easily prepared.

When the solid concentration is less than 1% by mass, it is difficult to prepare an aqueous ink composition containing the oxidized carbon black particles in a desired concentration.

When the solid concentration exceeds 25% by mass, the oxidized carbon black particles are likely to form aggregates, thus making it difficult to maintain the dispersibility (the dispersion stability) of the aqueous ink composition over a long period of time.

After the concentration adjustment, classification treatment may be performed again, and in this case, classification treatment by filtration as described above is preferable. Specific examples include methods where classification treatment is performed using a depth filter, a pleat filter, a membrane filter, or the like, and, furthermore, using such filters at multiple stages.

According to the present invention, in the case of producing a water dispersion of oxidized carbon black particles by liquid-phase oxidation of carbon black particles using a persulfate, liquid-phase oxidation is performed in the presence of an inorganic alkali in an amount equal to or greater than an amount theoretically necessary for neutralizing an acidic product produced by liquid-phase oxidation, therefore not only is it possible to simultaneously perform liquid-phase oxidation treatment and neutralization treatment without separately performing neutralization treatment and conveniently separate the target pigment by promptly neutralizing a produced acidic by-product and purification treatment and classification treatment, but also the need of disposal treatment for an acidic waste liquid is eliminated, and consequently a water dispersion of oxidized carbon black particles that exhibits excellent dispersibility and storage stability can be produced.

Thus, according to the present invention, in the case of producing a water dispersion of oxidized carbon black particles by liquid-phase oxidation of carbon black particles using a persulfate, a method for conveniently producing a water dispersion of oxidized carbon black particles that exhibits excellent dispersibility and storage stability can be provided.

Additionally, by adding other components to the water dispersion of oxidized carbon black particles obtained by the production method according to the present invention, an aqueous ink composition can be prepared.

The aqueous ink composition can be, for example, an aqueous ink-jet ink composition.

In this case, the proportion of carbon black particles contained in the aqueous ink composition such as an ink-jet ink composition is not particularly limited, and is preferably 1 to 10% by mass, more preferably 2 to 9% by mass, and even more preferably 3 to 8% by mass.

The proportion of water contained in the aqueous ink composition such as an aqueous ink-jet ink composition is preferably 20 to 70% by mass, more preferably 25 to 65% by mass, and even more preferably 30 to 60% by mass.

In the case of preparing an aqueous ink-jet ink composition using a water dispersion of oxidized carbon black particles obtained by the production method according to the present invention, for example, an aqueous organic solvent, a penetrating agent, a preservative, a chelating agent, a viscosity modifier, a surfactant, a resin, and the like are added as other components, as necessary.

The water-soluble organic solvent can be one or more selected from glycerin, ethylene glycol compounds such as diethylene glycol and triethylene glycol, ethers such as diethyl ether, alcohols such as methanol, ethanol, and isopropyl alcohol, and the like.

The proportion of the aqueous organic solvent contained in the aqueous ink-jet ink composition is preferably 1 to 50% by mass, more preferably 5 to 50% by mass, and even more preferably 10 to 50% by mass.

Due to the aqueous organic solvent contained in the aqueous ink-jet ink composition, it is possible to suppress the drying and solidification of ink in the nozzle part of an ink-jet printer, stabilize the injection of the ink composition, and easily suppress the drying of the nozzle during storage.

On the other hand, when it is desired to promote the drying of a coating of ink, alcohols such as methanol, ethanol, and isopropyl alcohol are preferably used as aqueous organic solvents.

The penetrating agent can be one or more selected from surfactants that lower surface tension, such as sodium lauryl sulfate, sodium dodecylbenzenesulfonate, sodium oleate, and sodium dioctyl sulfosuccinate.

Due to the penetrating agent contained in the ink composition, it is possible, especially when the material to be printed is a permeable material such as paper, to accelerate the permeation of the ink composition in the material to be printed and promote apparent dryness.

The proportion of the penetrating agent contained in the aqueous ink-jet ink composition is preferably more than 1.0% by mass and 5.0% by mass or less, more preferably 1.5 to 5.0% by mass, and even more preferably 2.0 to 5.0% by mass.

When the proportion of the penetrating agent contained is less than 1.0% by mass, the desired effect is unlikely to be exerted, and when exceeding 5.0% by mass, blurring of the printed material, print-through, and the like are likely to occur.

The antifungal agent can be one or more selected from sodium dihydroacetate, sodium benzoate, sodium pyridinethione-1-oxide, zinc pyridinethione-1-oxide, amine salts of 1,2-benzisothiazolin-3-one and 1-benzisothiazolin-3-one, and the like.

Due to the antifungal agent contained in the ink composition, development of fungi in the ink composition can be suppressed.

The proportion of the antifungal agent contained in the aqueous ink-jet ink composition is preferably 0.05 to 1.0% by mass, more preferably 0.05 to 0.5% by mass, and even more preferably 0.05 to 0.2% by mass.

The chelating agent can be one or more selected from ethylenediaminetetraacetic acid, a sodium salt of ethylenediaminetetraacetic acid, a tetraammonium salt of ethylenediaminetetraacetic acid, and the like.

Due to the chelating agent contained in the ink composition, precipitation of metal in the nozzle part of an ink-jet printer, precipitation of insoluble matter in the ink composition, and the like can be suppressed.

The proportion of the chelating agent contained in the aqueous ink-jet ink composition is preferably 0.005 to 0.5% by mass, more preferably 0.005 to 0.25% by mass, and even more preferably 0.005 to 0.1% by mass.

The aqueous ink composition such as an aqueous ink-jet ink composition can also contain an antifoaming agent in order to suppress bubbles generated during ink circulation and movement, or ink production, and, in addition, can also contain urea, dimethyl urea, thiourea, and the like as other additives.

According to the present invention, in the case of producing a water dispersion of oxidized carbon black particles by liquid-phase oxidation of carbon black particles using a persulfate, a method for conveniently producing a water dispersion of oxidized carbon black particles that exhibits excellent dispersibility and storage stability can be provided.

### [Examples]

Next, the present invention will now be more specifically described by way of Examples, but the Examples are merely illustrative and do not limit the present invention.

### (Example 1)

### (1) Liquid-phase oxidation treatment

Ion exchanged water in an amount of 55 kg was placed in a stainless-steel reaction vessel, 14.3 kg of a 25% by mass aqueous sodium hydroxide solution was added thereto, the mixture was stirred at 100 rpm for 10 minutes, then 2.4 kg of carbon black particles (coloring-grade carbon black "Takablack #7550F (nitrogen adsorption specific surface area 135 m²/g)" manufactured by Tokai Carbon Co., Ltd.) were added, and stirring was continued until the pigment was wet with water and became uniform. At this time, the pH of the mixed solution in the reaction vessel was 13.6.

Sodium persulfate (manufactured by ADEKA CORPORATION) in an amount of 8.5 kg was added while increasing the temperature inside the reaction vessel to 60°C over 2 hours, and the temperature was maintained at 60°C for 3 hours and then cooled to room temperature over 1 hour. At this time, the pH of the reaction solution in the reaction vessel was 10.6.

### (2) Purification treatment

The reaction solution obtained in (1) was taken out, acidic residual salts were removed using an ultrafiltration membrane "AHP-3013D" manufactured by Asahi Kasei Chemicals Corporation while adding pure water, desalting purification treatment was performed to 200 µS/cm or less, with the carbon black concentration being 4% by mass, and thereby an oxidized carbon black particle containing liquid was prepared.

As for the contents of acidic functional groups in the obtained oxidized carbon black particles, the amount of a hydroxyl group was 70 µmol/g, and the amount of a carboxyl group was 550 µmol/g.

### (3) Classification treatment

The concentration of oxidized carbon black in the oxidized carbon black particle containing liquid purified in (2) was regulated to 3.0% by mass, and then the liquid was fed at a constant rate of 0.5 L/min and received classification treatment using a high-speed refrigerated centrifugal separator manufactured by Hitachi Koki Co., Ltd., at a rotational speed of 9,000 rpm.

Then, the obtained centrifugally separated treatment liquid was concentrated until the concentration of oxidized carbon black was 20% by mass using an ultrafiltration membrane "AHP-3013D" manufactured by Asahi Kasei Chemicals Corporation.

Thereafter, filtration treatment was performed using a depth filter "Profile II" manufactured by PALL Corporation, and thereby the target water dispersion 1 of oxidized carbon black particles having a concentration of 20% by mass was obtained.

The pH of the obtained water dispersion 1 of oxidized carbon black particles was 8.3, and as for the contents of acidic functional groups in the obtained oxidized carbon black particles, the amount of a hydroxyl group was 70 µmol/g, and the amount of a carboxyl group was 550 µmol/g.

### (Example 2)

Water dispersion 2 of oxidized carbon black particles was obtained in the same manner as in Example 1 except that the amount of ion exchanged water added was changed to 55.8 kg from 55 kg, and 10.5 kg of a 48% by mass aqueous potassium hydroxide solution was added in place of 14.3 kg of a 25% by mass aqueous sodium hydroxide solution in Example 1(1).

At this time, the pH of the mixed solution in the reaction vessel before adding sodium persulfate was 13.5, and the pH of the reaction solution in the reaction vessel after adding sodium persulfate was 9.9.

The pH of the obtained water dispersion 2 of oxidized carbon black particles was 8.2, and as for the contents of acidic functional groups in the obtained oxidized carbon black particles, the amount of a hydroxyl group was 70 µmol/g, and the amount of a carboxyl group was 550 µmol/g.

### (Example 3)

Water dispersion 3 of oxidized carbon black particles was obtained in the same manner as in Example 1 except that the amount of ion exchanged water added was changed to 55.4 kg from 55 kg, and 8.1 kg of ammonium persulfate (manufactured by ADEKA CORPORATION) was added in place of 8.5 kg of sodium persulfate in Example 1(1).

At this time, the pH of the mixed solution in the reaction vessel before adding ammonium persulfate was 13.4, and the pH of the reaction solution in the reaction vessel after adding ammonium persulfate was 10.3.

The pH of the obtained water dispersion 3 of oxidized carbon black particles was 8.2, and as for the contents of acidic functional groups in the obtained oxidized carbon black particles, the amount of a hydroxyl group was 70 µmol/g, and the amount of a carboxyl group was 550 µmol/g.

### (Example 4)

Water dispersion 4 of oxidized carbon black particles was obtained in the same manner as in Example 1 except that the amount of ion exchanged water added was changed to 55.2 kg from 55 kg, and 8.3 kg of a uniform mixture of 4.25 kg of sodium persulfate (manufactured by ADEKA CORPORATION) and 4.05 kg of ammonium persulfate (manufactured by ADEKA CORPORATION) was added in place of 8.5 kg of sodium persulfate in Example 1(1).

At this time, the pH of the mixed solution in the reaction vessel before adding ammonium persulfate was 13.4, and the pH of the reaction solution in the reaction vessel after adding ammonium persulfate was 10.3.

The pH of the obtained water dispersion 4 of oxidized carbon black particles was 8.2, and as for the contents of acidic functional groups in the obtained oxidized carbon black particles, the amount of a hydroxyl group was 70 µmol/g, and the amount of a carboxyl group was 550 µmol/g.

### (Comparative Example 1)

Comparative water dispersion 1 of oxidized carbon black particles was obtained in the same manner as in Example 1 except that the amount of ion exchanged water added was changed to 59.2 kg from 55 kg, and 6.3 kg of a 48% by mass aqueous potassium hydroxide solution was added in place of 14.3 kg of a 25% by mass aqueous sodium hydroxide solution in Example 1(1).

The pH of the obtained comparative water dispersion 1 of oxidized carbon black particles was 3.5, and as for the contents of acidic functional groups in the obtained oxidized carbon black particles, the amount of a hydroxyl group was 70 µmol/g, and the amount of a carboxyl group was 550 µmol/g.

### (Comparative Example 2)

Comparative water dispersion 2 of oxidized carbon black particles was obtained in the same manner as in Example 1 except that the amount of ion exchanged water added was changed to 59.2 kg from 55.4 kg, and 6.3 kg of a 48% by mass aqueous potassium hydroxide solution was added in place of 14.3 kg of a 25% by mass aqueous sodium hydroxide solution in Example 3.

The pH of the obtained comparative water dispersion 2 of oxidized carbon black particles was 3.5, and as for the contents of acidic functional groups in the obtained oxidized carbon black particles, the amount of a hydroxyl group was 70 µmol/g, and the amount of a carboxyl group was 550 µmol/g.

### (Comparative Example 3)

### (1) Oxidation treatment

Ion exchanged water in an amount of 55 kg was placed in a stainless-steel reaction vessel, 8.5 kg of sodium persulfate (manufactured by ADEKA CORPORATION) was added thereto, the mixture was stirred at 100 rpm until complete dissolution, then 2.4 kg of carbon black particles (coloring-grade carbon black "Takablack #7550F (nitrogen adsorption specific surface area 135 m²/g)" manufactured by Tokai Carbon Co., Ltd.) were added, and stirring was continued until the pigment was wet with water and became uniform. The temperature inside the reaction vessel was increased to 60°C over 2 hours, and the temperature was maintained at 60°C for 3 hours and then cooled to room temperature over 1 hour.

### (2) Desalting treatment

The reaction solution obtained in (1) was taken out, acidic residual salts were removed using an ultrafiltration membrane "AHP-3013D" manufactured by Asahi Kasei Chemicals Corporation while adding pure water, desalting treatment was performed to 200 µS/cm or less, with the carbon black concentration being 4% by mass, and thereby an oxidized carbon black particle containing liquid was prepared.

### (3) Neutralization treatment

After the oxidized carbon black particle containing liquid obtained in (2) was concentrated to 40 kg, a 0.5 N aqueous sodium hydroxide solution was added such that the pH was 11.0, further, ion exchanged water was added such that the total amount was 60 kg, and then the mixture was subjected to heating treatment again in the stainless-steel reaction vessel at 60°C for 3 hours to receive neutralization treatment and then cooled to room temperature.

As for the contents of acidic functional groups in the obtained oxidized carbon black particles, the amount of a hydroxyl group was 70 µmol/g, and the amount of a carboxyl group was 540 µmol/g.

### (3) Classification treatment

The concentration of oxidized carbon black in the oxidized carbon black particle containing liquid purified in (2) was regulated to 3.0% by mass, and then the liquid was fed at a constant rate of 0.5 L/min and received classification treatment using a high-speed refrigerated centrifugal separator manufactured by Hitachi Koki Co., Ltd., at a rotational speed of 9,000 rpm.

### (4) Purification treatment

The dispersion obtained in (3) was subjected to purification treatment by removing basic residual salts using an ultrafiltration membrane "AHP-3013D" manufactured by Asahi Kasei Chemicals Corporation while adding pure water to 200 µS/cm or less, with the carbon black concentration being 4% by mass, and thereby a neutralized oxidized carbon black particle containing liquid was prepared.

Then, the obtained centrifugally separated treatment liquid was concentrated until the concentration of oxidized carbon black was 20% by mass using an ultrafiltration membrane "AHP-3013D" manufactured by Asahi Kasei Chemicals Corporation.

Thereafter, filtration treatment was performed using a depth filter "Profile II" manufactured by PALL Corporation, and thereby the target comparative water dispersion 3 of oxidized carbon black particles having a concentration of 20% by mass was obtained.

The pH of the obtained comparative water dispersion 3 of oxidized carbon black particles was 7.9, and as for the contents of acidic functional groups in the obtained oxidized carbon black particles, the amount of a hydroxyl group was 70 µmol/g, and the amount of a carboxyl group was 540 µmol/g.

The average particle size, viscosity, pH, and number of coarse particles, as well as the average particle diameter, viscosity, and pH after storage at 70°C for 4 weeks, of each of water dispersion 1 of oxidized carbon black particles to water dispersion 4 of oxidized carbon black particles obtained in Example 1 to Example 4 and comparative carbon black dispersion 1 to comparative water dispersion 3 of oxidized carbon black particles obtained in Comparative Example 1 to Comparative Example 3 at normal temperature were measured by the following methods. Results are shown in Table 1.

### (Average particle diameter)

The average particle diameter was measured by a dynamic light scattering method using "UPA-150EX" of Nikkiso Co., Ltd.

### (Viscosity)

Viscosity at 25°C was measured with an E-type viscometer "TVE-22" manufactured by Toki Sangyo Co., Ltd.

### (Viscosity)

pH at 25°C was measured with a pH meter "HM-30R" manufactured by DKK-TOA Corporation.

### (Number of coarse particles)

As for the number of coarse particles, the number of coarse particles having a particle diameter of 0.5 µm or more was measured using "AccuSizer APS" manufactured by Particle Sizing Systems to calculate a value in terms of a carbon black concentration of 20% by mass.

**[Table 1]**

| Sample | Average particle diameter | | Viscosity | | pH | | Number of coarse particles |
|---|---|---|---|---|---|---|---|
| | Normal temperature | After 70°C for 4 weeks | Normal temperature | After 70°C for 4 weeks | Normal temperature | After 70°C for 4 weeks | Normal temperature |
| Water dispersion of oxidized carbon black particles 1 | 79 nm | 77 nm | 3.2 mPas | 3.0 mPas | 8.3 | 7.6 | 8.0×10⁶ particles/ml |
| Water dispersion of oxidized carbon black particles 2 | 78 nm | 77 nm | 3.1 mPas | 2.9 mPas | 8.2 | 7.6 | 7.9×10⁶ particles/ml |
| Water dispersion of oxidized carbon black particles 3 | 80 nm | 78 nm | 3.2 mPas | 3.1 mPas | 8.2 | 7.5 | 7.9×10⁶ particles/ml |
| Water dispersion of oxidized carbon black particles 4 | 79 nm | 78 nm | 3.2 mPas | 3.1 mPas | 8.2 | 7.6 | 8.1×10⁶ particles/ml |
| Comparative water dispersion of oxidized carbon black particles 1 | 95 nm | 125 nm | 3.8 mPas | 8.7 mPas | 3.5 | 3.2 | 5.9×10⁷ particles/ml |
| Comparative water dispersion of oxidized carbon black particles 2 | 93 nm | 130 nm | 3.7 mPas | 9.2 mPas | 3.5 | 3.2 | 6.1×10⁷ particles/ml |
| Comparative water dispersion of oxidized carbon black particles 3 | 80 nm | 76 nm | 3.3 mPas | 3.1 mPas | 7.9 | 7.4 | 1.1×10⁷ particles/ml |

As for water dispersion 1 of oxidized carbon black particles to water dispersion 4 of oxidized carbon black particles obtained in Example 1 to Example 4, it can be understood that in the case of producing a water dispersion of oxidized carbon black particles by liquid-phase oxidation of carbon black particles using a persulfate, liquid-phase oxidation is performed in the presence of an inorganic alkali in an amount equal to or greater than an amount theoretically necessary for neutralizing an acidic product produced by liquid-phase oxidation, therefore not only is it possible to simultaneously perform liquid-phase oxidation treatment and neutralization treatment without separately performing neutralization treatment and conveniently separate the target pigment by promptly neutralizing a produced acidic by-product and purification treatment and classification treatment, but also it is possible to eliminate the need of disposal treatment for an acidic waste liquid.

Also, it can be understood from Table 1 that water dispersion 1 of oxidized carbon black particles to water dispersion 4 of oxidized carbon black particles obtained in Example 1 to Example 4 exhibit excellent dispersibility and storage stability because the number of coarse particles is suppressed and even the retention of the dispersion at 70°C for 4 weeks leads to almost no change in average particle diameter, viscosity, and pH.

On the other hand, as for comparative water dispersion 1 of oxidized carbon black particles to comparative water dispersion 2 of oxidized carbon black particles obtained in Comparative Example 1 to Comparative Example 2, it can be understood that in the case of producing a water dispersion of oxidized carbon black particles by liquid-phase oxidation of carbon black particles using a persulfate, liquid-phase oxidation is performed in the presence of an inorganic alkali in an amount less than an amount theoretically necessary for neutralizing an acidic product produced by liquid-phase oxidation, therefore, as shown in Table 1, the obtained water dispersions have a low pH, contain large amounts of coarse particles, have a greatly changed average particle size and viscosity after being retained at 70°C for 4 weeks, and have poor dispersibility and stability (storage stability).

Also, as for comparative water dispersion 3 of oxidized carbon black particles obtained in Comparative Example 3, it can be understood that in the case of producing a water dispersion of oxidized carbon black particles by liquid-phase oxidation of carbon black particles using a persulfate, neutralization treatment is performed separately from liquid-phase oxidation, therefore not only is the production process complex and are the purification treatment for a produced acidic by-product and the classification treatment complex, but also disposal treatment for an acidic waste liquid is required. Also, it can be understood from Table 1 that the obtained water dispersion contains large amounts of coarse particles and has inferior dispersibility.

### [Industrial Applicability]

According to the present invention, in the case of producing a water dispersion of oxidized carbon black particles by liquid-phase oxidation of carbon black particles using a persulfate, a method for conveniently producing a water dispersion of oxidized carbon black particles that exhibits excellent dispersibility and storage stability can be provided.

## Claims

1. A method for producing a water dispersion of oxidized carbon black particles by bringing at least one persulfate and carbon black particles into contact to perform liquid-phase oxidation, wherein
in the presence of an inorganic alkali in an amount equal to or greater than an amount theoretically necessary for neutralizing an acidic product produced by the liquid-phase oxidation,
the persulfate and the carbon black particles are brought into contact in water and subjected to liquid-phase oxidation treatment while being heated.

2. The method for producing a water dispersion of oxidized carbon black particles according to claim 1, wherein a water slurry comprising the inorganic alkali in an amount equal to or greater than an amount theoretically necessary for neutralizing an acidic product produced by the liquid-phase oxidation and the carbon black particles is mixed with the at least one persulfate, and the resulting mixture is heated.

3. The method for producing a water dispersion of oxidized carbon black particles according to claim 1, wherein a water slurry comprising the at least one persulfate and the carbon black particles is mixed with the inorganic alkali in an amount equal to or greater than an amount theoretically necessary for neutralizing an acidic product produced by the liquid-phase oxidation, and the resulting mixture is heated.

4. The method for producing a water dispersion of oxidized carbon black particles according to claim 1, wherein an aqueous solution of the at least one persulfate, the carbon black particles, and the inorganic alkali in an amount equal to or greater than an amount theoretically necessary for neutralizing an acidic product produced by the liquid-phase oxidation are mixed while being heated.

5. The method for producing a water dispersion of oxidized carbon black particles according to claim 1, wherein the heating is performed at a temperature of 40 to 90°C.

6. The method for producing a water dispersion of oxidized carbon black particles according to claim 2, wherein the heating is performed at a temperature of 40 to 90°C.

7. The method for producing a water dispersion of oxidized carbon black particles according to claim 3, wherein the heating is performed at a temperature of 40 to 90°C.

8. The method for producing a water dispersion of oxidized carbon black particles according to claim 4, wherein the heating is performed at a temperature of 40 to 90°C.

9. The method for producing a water dispersion of oxidized carbon black particles according to any one of claim 1 to claim 8, further comprising sequentially performing purification treatment and classification treatment after the liquid-phase oxidation treatment.
